# EUROPEAN PATENT APPLICATION

(11) **EP 0 940 764 A1**
(43) Date of publication of application: **08.09.1999**
(21) Application number: 99301546.0
(22) Date of filing: 02.03.1999
(51) Int. Cl.: G06K 11/18

(54) **Computer mouse**

(30) Priority: 04.03.1998 GB 9804610
(71) Applicant: Yang, Tai-Her, Taipei (TW)
(72) Inventor: Yang, Tai-Her, Taipei (TW)
(74) Representative: Wright, Howard Hugh Burnby

(57) **Abstract**

The invention is related to a structural design for a single hand holding type computer mouse (1) or other functional hand holding type controller device with a U type arc shape extended structure which is mainly comprised of that the mouse casing body is provided with a U type arc shape extended structure, wherein the front end upper side of the said structure is installed with a track ball (12), and the mouse function buttons (13) are installed at a selected side or at the side near the track ball, thereby the said computer mouse casing is very suitable for off table finger holding operations in the air, i.e. the friction operation on the desk surface or mouse pad is completely released, and the mouse function buttons can be conveniently operated at all angles in the air, therefore it is easy and convenient in usage.

## Description

### BACKGROUND OF THE INVENTION

### (a) Field of the invention

The structure design of a single hand holding type computer mouse or other functional hand holding type controller device with a U type arc shape extended structure.

### (b) Description of the Prior Art:

The conventional mouse casing are mostly in horizontal seating design suitable for the mouse to closely touch the desk surface or mouse pad, wherein a track ball is installed at its bottom for controlling the screen arrow translations and the function buttons are provided in required number at its front end side (two or three different function buttons are usually installed). The conventional mouse is mainly relied on the touch friction between its bottom and the desk surface or mouse pad, thereby to transmit the screen arrow translation control signal through the movement of the mouse track ball interface, while the buttons are for different function selections; thereof the said conventional mouse design is limited to its existing embodying types and is completely relied on the desk surface or mouse pad to obtain the operation effects, whereby once out of table, all functions are lost, while when the mouse is move to match with the mouse pad for reciprocating friction, it is always easily moved out of the range of mouse pad, therefore the integral usage is in fact not convenient enough and ideal, even though designs of upward finger agitating track balls are developed, it is still not perfect due to its bulky volume.

### SUMMARY OF THE INVENTION

The main purpose of the invention is to give the structure design of a single hand holding type computer mouse or other functional hand holding type controller device with a U type arc shape extended structure, wherein the it is aimed at improving the mouse casing body by providing the mouse with an U type arc shape extended structure , whereof the front upper end of the said extended structure is installed with a track ball for finger agitation to control the screen arrow translation from time to time, and the mouse function buttons are installed at the side near the track ball, thereby to constitute an innovative computer mouse embodiment, i.e. it is released from the limitations by the table surface or mouse pad, especially as the mouse can be operated by finger holding in the air, its track ball agitation or function buttons selection are no longer limited by the conventional operating methods, therefore it is very agile and convenient.

### BRIEF DESCRIPTION OF THE DRAWINGS

Figure 1 is a 3-D assembly drawing of the first embodied example of the invention.

Figure 2 is the top view of Figure 1.

Figure 3 is the side view of Figure 1.

Figure 4 is the front view of Figure 1.

Figure 5 is a 3-D assembly drawing of the second embodied example.

Figure 6 is the top view of Figure 5.

Figure 7 is the side view of Figure 5.

Figure 8 is the front view of Figure 5.

Figure 9 is a 3-D assembly drawing of the third embodied example.

Figure 10 is the top view of Figure 9.

Figure 11 is the side view of Figure 9.

Figure 12 is the front view of Figure 9.

### DETAILED DESCRIPTION OF THE PREFEERED EMBODIMENTS

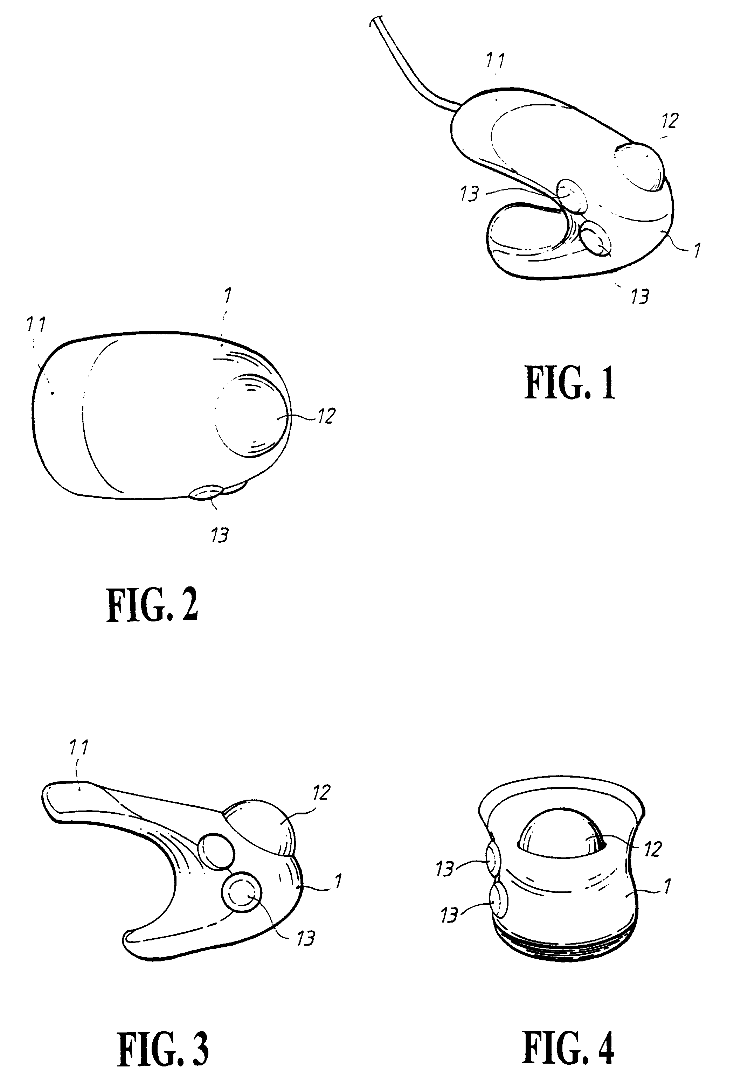

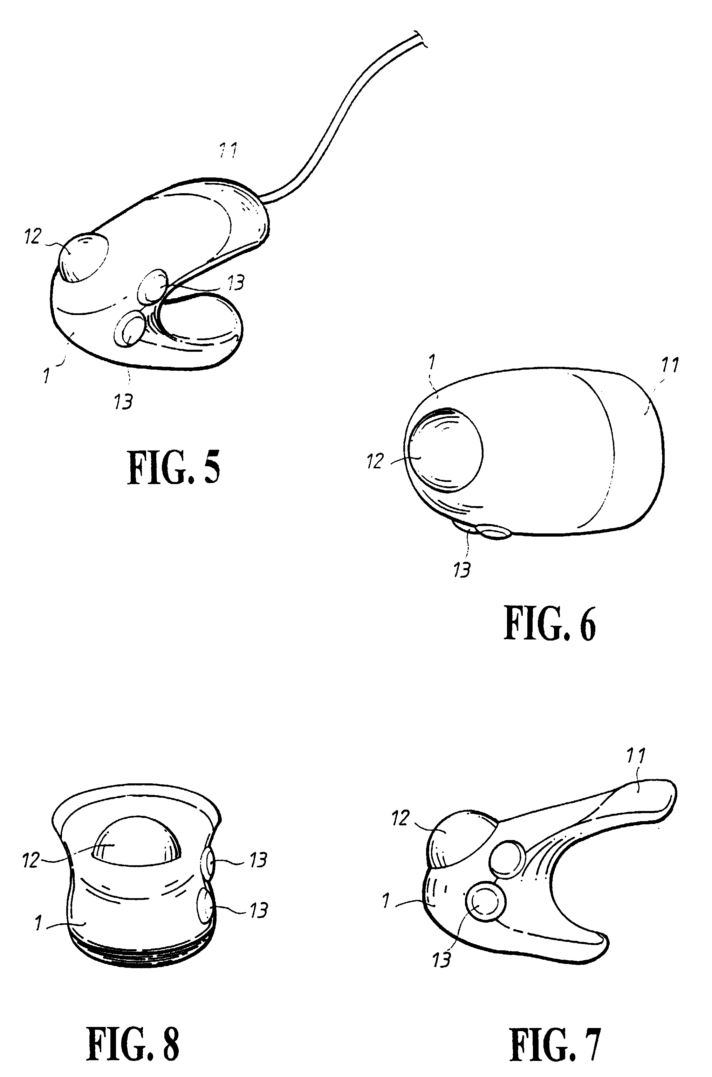

As shown in figure 1, the invention is related to the structure example of a single hand holding type computer mouse which is mainly comprised of an outside casing 1 with an U type arc shape extended structure for finger holding, it is for matching with the inside translation direction detecting circuit and output interface circuit devices, whereof the inside respective electric circuit devices are well known arts, and are not repeated here. Thereof the wired or wireless (such as the remote receiving through infrared beam or emitting frequency signals ) connections between the said mouse and monitor are all within the applicable range of subject case, in addition the rolling tract ball shall also include the analog or digital embodying types including the resistance type, capacitor type, photo type, pulse or encoding type, etc. or further to include the finger agitating but non-mechanical translation detecting type detector devices such as induction type, pressure sensing type, photo type, variable resistance type, or variable capacitor types, etc. The improvement on the mouse casing 1 aimed by the subject case is that the casing body 1 is comprised of an U type arc shape extended structure 11 suitable for finger holding, wherein front end upper side of the said extended structure 11 is installed with a track ball 12, and the said extended structure 11 are further installed with one or more than one mouse function buttons 13 at a properly selected side (as shown in figures 1 to 4 or figures 5 to 8, either left side or right side is possible), thereby through this computer mouse casing structure, the track ball 12 can be directly agitated and the function buttons 13 can be randomly selected, therefore the mouse can be finger held and operated in air while completely released from the limitations imposed by the desk surface or mouse pad.

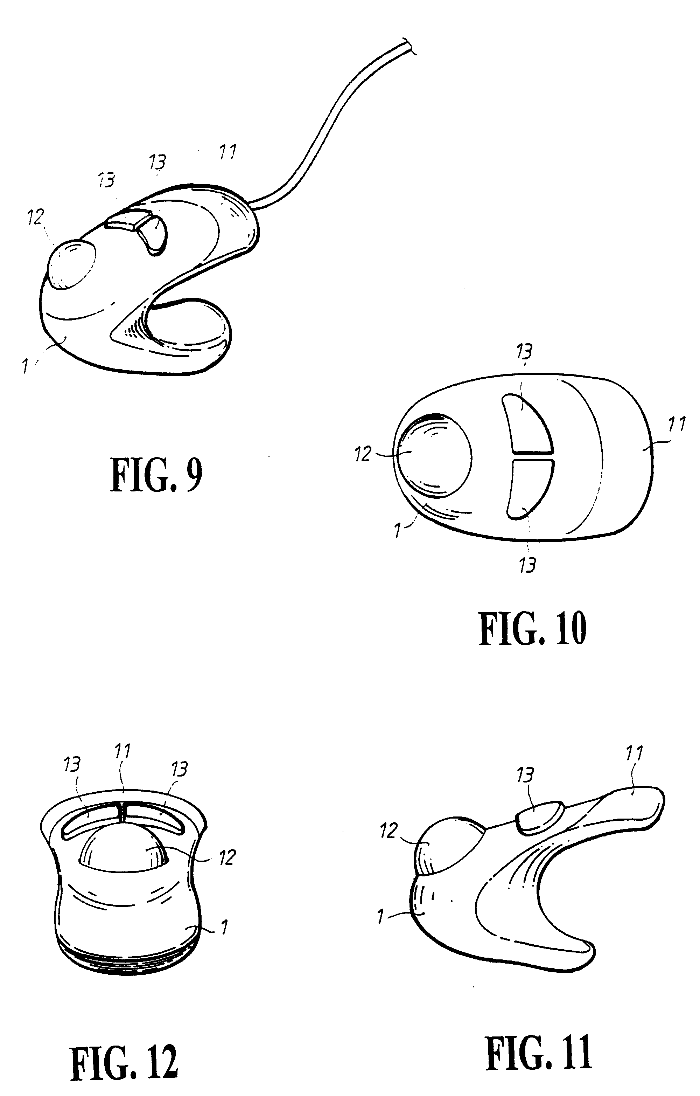

Based on the design principle of this case, the installation of mouse function buttons 13 can be also according to the embodying examples shown in figures 9 to 12, whereby the function buttons 13 can be selected to be installed at the side near to the track ball 12, thereby the selection pressing becomes convenient and the operation is no longer restrained by the planetary space.

Through structural improvements on the mouse casing body 1, the said casing body 1 is presented in a proper U type arc shape for convenient finger holding, whereby to allow for finger holding as well as finger agitate the track ball 12 to control the screen arrow translations or selecting function buttons 13 in the air, thereby the mouse is not only freed from the plane limitations of desk surface or mouse pad, but is also suitable for holding operations at any angles in the air, therefore it is easy to use and convenient.

Further, besides of the aforesaid embodying examples, the casing structure can be comprised of an integrated body or assembled by two or more than two components.

As summarized from the aforesaid descriptions, the subject case has provided a design change on spatial embodiment of the mouse casing body, and it is more convenient in usage compared with the conventional type mouse, therefore it is obviously innovative and practically useful.

## Claims

1. A single hand holding type computer mouse or other functional hand holding type controller device with a U type arc shape extended structure, wherein it is comprised of an external casing body to match with the inside translation direction detecting circuit and output interface circuit devices, and is characterized in the following:
The said mouse casing structure is presented in an U type arc shape extended structure , whereof the front upper end of the said extended structure is installed with a track ball (or other devices with similar functions), and the said extended structure are further installed with one or more than one mouse function buttons at a selected side, thereby, the track ball can be directly agitated and the function buttons can be randomly selected, therefore the mouse can be finger held and operated in air while completely released from the limitations imposed by the desk surface or mouse pad.

2. A single hand holding type computer mouse or other functional hand holding type controller device with a U type arc shape extended structure as in claim 1, wherein its function button can be selected to install at a proper location of side near to a neighboring track ball.

3. A single hand holding type computer mouse or other functional hand holding type controller device with a U type arc shape extended structure as in claim 1, wherein the said casing body is in a random U type arc shape for easy finger holding.

4. A single hand holding type computer mouse or other functional hand holding type controller device with a U type arc shape extended structure as in claim 1, wherein the said computer mouse can be in wired or wireless coupling status, such as infrared beam or emitting frequency signals, etc.

5. A single hand holding type computer mouse or other functional hand holding type controller device with a U type arc shape extended structure as in claim 1, wherein the said track ball is comprised of analog or digital embodying types including the resistance type, capacitor type, photo type, pulse or encoding type, etc. or further to include the finger agitating but non-mechanical translation detecting type detector devices such as induction type, pressure sensing type, photo type, variable resistance type, or variable capacitor types, etc.

6. A single hand holding type computer mouse or other functional hand holding type controller device with a U type arc shape extended structure as in claim 1, wherein the said casing structure can be comprised of an integrated body or assembled by two or more than two components.
